# EUROPÄISCHE PATENTSCHRIFT

(11) **EP 0 266 684 B1**
(45) Veröffentlichungstag und Bekanntmachung des Hinweises auf die Patenterteilung: **10.03.1993**
(21) Anmeldenummer: 87115942.2
(22) Anmeldetag: 30.10.1987
(51) Int. Cl.: B01D 53/26, F26B 21/04

(54) **Verfahren zum Regenerieren einer mit Feuchtigkeit beladenen Trocknungspatrone sowie Trockner mit einer Regeneriervorrichtung zur Durchführung eines solchen Verfahrens**
Method and dryer comprising an apparatus for the regeneration of a drying cartridge impregnated with moisture
Méthode et sécheur comprenant un dispositif de régénération d'une cartouche de séchage chargée d'humidité

(30) Priorität: 05.11.1986 DE 3637700
(43) Veröffentlichungstag der Anmeldung: 11.05.1988
(73) Patentinhaber: Motan GmbH, D-88316 Isny (DE)
(72) Erfinder: Roth, Paul, Dipl.-Ing.(FH), D-7972 Isny/Allgäu (DE)
(74) Vertreter: Jackisch-Kohl, Anna-Katharina

(56) Entgegenhaltungen:
- EP-A- 0 162 537
- DE-A- 3 412 173
- GB-A- 706 045
- US-A- 4 314 828

## Beschreibung

Die Erfindung betrifft ein Verfahren zum Regenerieren einer mit Feuchtigkeit beladenen Trocknungspatrone nach dem Oberbegriff des Anspruches 1 sowie einen Trockner mit einer Regeneriervorrichtung zur Durchführung eines solchen Verfahrens nach Anspruch 5.

Für die Aufbereitung von Trocknungsluft zur Trocknung von Kunststoffen, die in Form von Granulaten und Pulver vorliegen können, werden Trocknungspatronen verwendet. Die Trocknungsluft wird zunächst durch das zu trocknende Gut geführt, wobei die Trocknungsluft Feuchtigkeit aus dem Gut aufnimmt. Anschließend wird diese mit Feuchtigkeit beladene Luft durch die Trocknungspatrone geführt, welche die Feuchtigkeit aus der Trocknungsluft aufnimmt. Anschließend gelangt die Trocknungsluft wieder zum zu trocknenden Gut. Dieser Trocknungsprozeß wird so lange fortgeführt, bis die Trocknungspatrone nahezu keine Feuchtigkeit mehr aus der Trocknungsluft aufnehmen kann. Bei kontinuierlich arbeitenden Verfahren werden mehrere, meistens zwei bis vier Trocknungspatronen verwendet, von denen eine stets regeneriert wird. Dadurch stehen immer ausreichend viele Trocknungspatronen zur Verfügung. Bei diskontinuierlich arbeitenden Systemen wird nur eine Trocknungspatrone eingesetzt, die so lange verwendet werden kann, bis der Taupunkt eine entsprechend hohe Temperatur aufweist und nur noch wenig Feuchtigkeit aus der Trocknungsluft aufnehmen kann; dann muß diese Trocknungspatrone regeneriert werden. Bei der Regeneration wird atmosphärische Luft erhitzt und durch die zu regenerierende Trocknungspatrone geführt, wobei die erhitzte Luft die Feuchtigkeit aus der zu regenerierenden Trocknungspatrone aufnimmt. Die Regenerierluft wird hierbei erwärmt, um die Feuchtigkeit möglichst rasch aufnehmen zu können. Nach dem Durchtritt durch die zu regenerierende Trocknungspatrone wird die mit Feuchtigkeit beladene Regenerierluft ausgeblasen. Bei diesem Verfahren wird ständig atmosphärische Luft von außen aufgenommen, vor dem Eintritt in die zu regenerierende Trockungspatrone erhitzt und nach dem Durchtritt durch die Trocknungspatrone wieder ausgeblasen. Die ausgeblasene Luft enthält einen hohen Energieanteil, der ungenutzt ausgeblasen wird. Zum Aufheizen der atmosphärischen Luft muß außerdem erhebliche Energie aufgewandt werden, um die stets nachströmende kühle atmosphärische Luft auf die gewünschte Trocknungstemperatur aufzuheizen.

In der Regel muß die zu regenerierende Trocknungspatrone nach der Regenerierung gekühlt werden, bevor sie wieder zum Trocknen des Gutes verwendet werden kann. Hierzu wird bei dem bekannten Verfahren die Heizeinrichtung abgeschaltet und nur noch die kühle atmosphärische Luft durch die getrocknete Trocknungspatrone geführt. Diese atmosphärische Luft befeuchtet die Trocknungspatrone teilweise, so daß der Wirkungsgrad des nach diesem Verfahren arbeitenden Trockners verschlechtert wird.

Bei dem gattungsgemäßen Verfahren (US-A 4 314 828) wird Luft eines Atomreaktors getrocknet und gereinigt, bevor sie in die Atmosphäre abgelassen wird. Diese Abluft wird zunächst in einer Luftentfeuchtungseinrichtung getrocknet, die Trocknungspatronen mit Adsorptionsmitteln aufweist. Zu Beginn des Regenerationsvorganges wird atmosphärische Luft im geschlossenen Regenerierkreislauf durch die zu regenerierende Trocknungspatrone geführt. Die Luft wird erhitzt und nimmt beim Durchströmen der Trocknungspatrone Feuchtigkeit vom Adsorptionsmittel auf. In Strömungsrichtung der Luft hinter der Trocknungspatrone ist ein Kühler/Kondensator vorgesehen, in dem die Feuchtigkeit aus der Luft abgeschieden wird. Dabei kühlt sich die Luft ab und muß darum vor dem erneuten Durchströmen der Trocknungspatrone wieder erhitzt werden. Die Feuchtigkeit wird somit laufend unter starker Abkühlung der Luft innerhalb des geschlossenen Kreislaufes abgeschieden. Vor dem Eintritt in die Trocknungspatrone hat die Luft eine Temperatur von etwa 320° C, während sie nach dem Abscheiden der Feuchtigkeit im Kühler/Kondensator auf etwa 40° C abgekühlt ist. Darum muß die Luft bei jedem Durchlaufen des Kreislaufes von etwa 40° C auf etwa 320° C aufgeheizt werden. Zum anschließenden Kühlen der regenerierten Trocknungspatrone wird die Heizeinrichtung abgeschaltet und die Luft weiterhin im geschlossenen Kreislauf geführt, wodurch die Trocknungspatrone abgekühlt wird. Für die Regenerierung der Trocknungspatrone ist somit ein hoher Energieaufwand notwendig.

Bei anderen bekannten Verfahren und Vorrichtungen zum Regenerieren von mit Feuchtigkeit beladenen Trocknungspatronen (DE-A-3 412 173 und EP-A-0 162 537) wird die durch die zu regenerierende Trocknungspatrone geführte Luft in die Atmosphäre abgelassen. Dadurch ist auch bei diesen Verfahren ein hoher Energieaufwand zur Regenerierung der Trocknungspatrone erforderlich.

Der Erfindung liegt die Aufgabe zugrunde, das gattungsgemäße Verfahren und den Trockner so auszubilden, daß nach der Regenerierung der Patrone ein optimaler tiefstmöglicher Taupunkt erreicht wird, wobei die für die Regenerierung notwendige Energie so klein wie möglich sein soll.

Diese Aufgabe wird beim gattungsgemäßen Verfahren erfindungsgemäß mit den kennzeichnenden Merkmalen des Anspruches 1 und beim Trockner erfindungsgemäß mit den Merkmalen des Anspruches 5 gelöst.

Beim erfindungsgemäßen Verfahren wird die Regenerierluft im geschlossenen Regenerierkreislauf durch die zu regenerierende Trocknungspatrone geführt. Dadurch kann in diesem geschlossenen System nahezu ohne Energieverlust - Energieverluste durch Isolationen sind vernachlässigbar - die Feuchtigkeit in der zu regenerierenden Trocknungspatrone ausgetrieben werden, ohne daß hierzu ein kostenaufwendiger Wärmetauscher für die Abluft eines nicht geschlossenen Kreislaufes oder dgl. notwendig wäre. Die Regenerierluft wird so lange im Kreislauf geführt, bis sie mit Feuchtigkeit gesättigt oder die Trocknungspatrone trocken ist. Falls die Trocknungspatrone bei Erreichen der Sättigung der Regenerierluft noch nicht vollständig trocken ist, wird dem geschlossenen Kreislauf zur weitergehenden Trocknung erneut frische atmosphärische Luft zugeführt. Dieser Vorgang wird so lange wiederholt, bis die Trocknungspatrone trocken ist. Dann wird die Regenerierluft ausgeblasen. Beim Durchgang durch die zu regenerierende Trocknungspatrone verliert die Regenerierluft nur so viel Energie, wie sie zum Aufheizen der Trocknungspatrone und zum Verdampfen der in der Trocknungspatrone befindlichen Feuchtigkeit benötigt. Es muß darum im wesentlichen die Verdampfungsenergie der im Kreislauf strömenden Regenerierluft zugeführt werden. Damit kann bei geringstem Energieaufwand ein sehr tiefer optimaler Taupunkt erreicht werden, so daß die regenerierte Trocknungspatrone beim späteren Trocken des Gutes optimale Ergebnisse liefert. Die beim Regenerieren getrocknete und dabei erhitzte Trocknungspatrone wird anschließend durch die neue atmosphärische Luft gekühlt, die ebenfalls im geschlossenen Regenerierkreislauf durch die Trocknungspatrone geführt wird. Die beim wiederholten Abkühlen dieser Luft frei werdende Rückkühlenergie kann über einen Wärmetauscher wirtschaftlich genutzt werden, beispielsweise zum Aufheizen der Trocknungsluft, die zum Trocknen des Gutes verwendet wird. Es ist aber auch möglich, die beim wiederholten Abkühlen frei werdende Energie wirtschaftlich abzuführen.

Dies ist beispielsweise dann notwendig, wenn die Kühlluft nach dem Durchtritt durch die zu kühlende regenerierte Patrone eine noch so hohe Temperatur hat, daß sie nicht zum Trocknen des Gutes verwendet werden kann. In diesem Fall ist es zweckmäßig, die Kühlluft innerhalb des Regenerierkreislaufes über den Wärmetauscher zu führen, der die Wäme aus der Kühlluft aufnimmt und sie an die Umgebung abgibt. Ein Abführen der Energie der heißen regenerierten Patrone ist immer über den Wärmetauscher in den Trocknungskreislauf möglich, wobei eine Regelung vorgesehen ist, damit die Temperatur des Trocknungskreislaufes nicht zu hoch wird. Ein optimal tiefstmöglicher Taupunkt nach der Regenerierung der zu regenerierenden Patrone bei geringstem Gesamtenergieaufwand ergibt sich, weil sowohl die Trocknung als auch die Kühlung beim Regenerieren jeweils im geschlossenen Regenerierkreislauf durchgeführt werden.

Beim erfindungsgemäßen Trockner wird der Wärmetauscher während der Kühlung der regenerierten Trocknungspatrone durch das Stellteil in den geschlossenen, vom Trocknungskreislauf getrennten Regenerierkreislauf geschaltet. Die Regenerierluft nimmt beim Durchströmen der getrockneten Trocknungspatrone Wärme auf, wodurch sie gekühlt wird. Die aus der Trocknungspatrone austretende, erwärmte Luft durchströmt den Wärmetauscher und gibt dabei ihre Wärme ab. Auf diese Weise kann die Trocknungspatrone nach dem Trocknen auf die erforderliche Temperatur gekühlt werden, um sie wieder in den Trocknungskreislauf einschalten zu können. Die vom Wärmetauscher aufgenommene Wärme aus der Kühlluft kann in geeigneter Weise weiterverwendet werden. Auf diese Weise können mit dem erfindungsgemäßen Trockner die Trocknungspatronen bei geringstem Energieverlust und geringstem Energieaufwand regeneriert werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigt:
- Fig. 1a: in schematischer Darstellung eine erfindungsgemäße Trocknungsvorrichtung, bei der durch die eine,in einem Trocknungskreislauf liegende Trocknungspatrone mit Feuchtigkeit beladene Trocknungsluft geführt ist und bei der eine andere Patrone in einem Regenerierkreislauf getrocknet wird.
- Fig. 1b: eine Darstellung entsprechend Fig.1a, wobei die eine Patrone in den Regenerierkreislauf und die andere Patrone in den Trocknungskreislauf geschaltet ist,
- Fig.2: die Vorrichtung gemäß Fig.1a, bei der der Regenerierkreislauf zum Auslassen der zum Regenerieren verwendeten heißen Luft geöffnet ist,
- Fig.3: die Vorrichtung gemäß Fig. 1a, bei der die eine getrocknete Patrone im Kreislauf gekühlt wird,
- Fig.4: eine weitere Möglichkeit der Führung der Regenerierluft während der Rückkühlung, bei welcher nur ein Teilstrom der abzuführenden Energie in den Teilstrom über den Wärmetauscher geführt wird.

Mit der Trockenvorrichtung wird in einem Trocknungsbehältnis 1 befindliches Gut, vorzugsweise Kunststoffgranulat oder -pulver, mittels trockener Luft, sogenannter Trocknungsluft, getrocknet. In das Trocknungsbehältnis 1 mündet eine Zuführleitung 2, in der eine Heizeinrichtung 3 liegt, mit der die in der Zuführleitung strömende Trocknungsluft ggf. erwärmt werden kann. Die Mündung 4 der Zuführleitung 2 liegt im Bereich des Bodens des Trocknungsbehältnisses, so daß die aus ihr austretende trockene Luft im Trocknungsbehältnis nach oben in Richtung der eingezeichneten Pfeile strömt. Im oberen Bereich des Trocknungsbehältnisses 1 befindet sich ein Auslaß 5, an den eine Rückführleitung 6 angeschlossen ist. In ihr befindet sich ein Filter 7, um in der aus dem Trocknungsbehältnis strömenden Trocknungsluft enthaltenen Staub und dgl. aufzufangen. In der Rückführleitung 6 befindet sich außerdem ein Gebläse 8, das zwischen demFilter 7 und einer Trocknungspatrone 9 liegt, in die die Rückführleitung 6 mündet. Die Zuführleitung 2 ist ebenfalls an die Trocknungspatrone 9 angeschlossen. Die Heizeinrichtung 3 befindet sich in Strömungsrichtung hinter der Trocknungspatrone, die vorzugsweise eine Molekularsieb-Patrone ist.

Im Trocknungsbehältnis 1 bfindet sich das zu trocknende Pulver oder Granulat. Die Trocknungsluft strömt über die Zuführleitung 2 in das Trocknungsbehältnis 1 und durchströmt das Granulat oder das Pulver . Hierbei nimmt die Trocknungsluft Feuchtigkeit aus dem Granulat oder Pulver auf und strömt über die Rückführleitung 6 und den Filter 7 in die Trocknungspatrone 9. Dort wird die von der Trocknungsluft aufgenommene Feuchtigkeit zurückgehalten, so daß wieder trockene Luft über die Zuführleitung 2 in das Trocknungsbehältnis 1 gelangt. Je nach gewünschter bzw. geforderter Trocknungstemperatur wird die Trocknungsluft in der Zuführleitung 2 mit der Heizeinrichtung 3 auf die erforderliche Temperatur erwärmt. Die Trocknungsluft wird somit in einem Trocknungskreislauf 10 geführt, wobei das Pulver oder das Granulat im gewünschten Maße getrocknet wird. In der Zeichnung ist nur eine Trocknungspatrone 9 im Trocknungskreislauf 10 dargestellt. Selbstverständlich ist es möglich, mehrere Trocknungspatronen 9 im Trocknungskreislauf 10 einzusetzen.

Die Trocknungsluft wird so lange im Kreislauf geführt, bis das Trocknungsgut im Behältnis 1 ausreichend entfeuchtet ist. Wenn die Trocknungspatrone 9 erschöpft ist und nur noch wenig Feuchtigkeit von der Trocknungsluft aufnehmen kann, wird sie regeneriert.

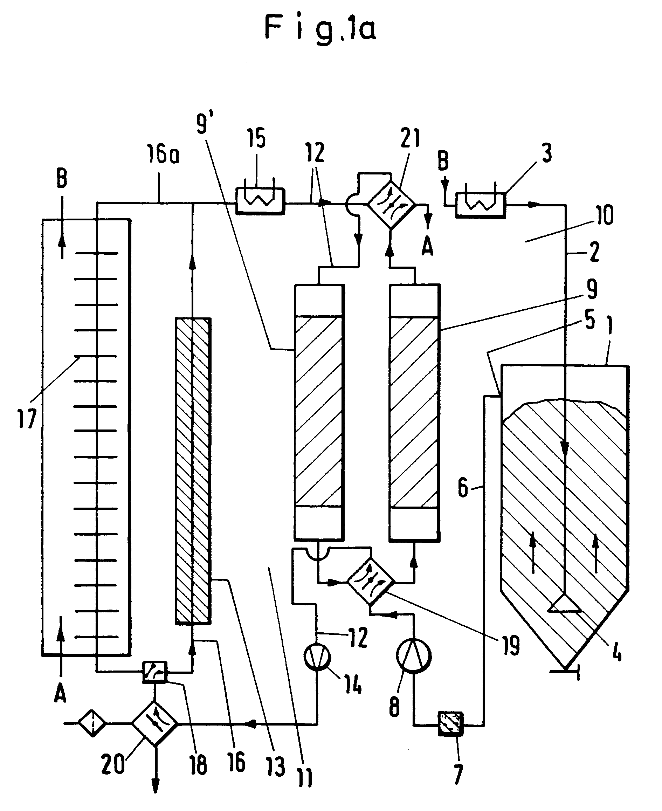

Hierzu ist die Vorrichtung mit einem Regenerierkreislauf 11 versehen, in dem die zu regenerierende Patrone 9ʹ liegt. An sie ist eine Leitung 12 angeschlossen, die, was in Fig.1a nur anhand eines Leitungszweiges 16 schematisch dargestellt ist, von einer Isolierung 13 umgeben ist. Vorzugsweise sind sämtliche Leitungen gegenüber der Atmosphäre getrennt isoliert. In Strömungsrichtung der Regenerierluft hinter der zu regenerierenden Patrone 9ʹ liegt in der Leitung 12 ein Gebläse 14 und eine Heizeinrichtung 15. Sie liegt zwischen dem Gebläse 14 und der Patrone 9ʹ. Die Leitung 12 hat noch einen Leitungszweig 16a, in dem ein,vorzugsweise ebenfalls nach außen isolierter Wärmetauscher 17 liegt. Der Leitungszweig 16a kann über ein Ventil 18 geöffnet bzw. geschlossen werden. Bei der Darstellung gemäß Fig.1a ist der Leitungszweig 16a geschlossen, so daß die Regenerierluft im Regenerierkreislauf 11 in Richtung der eingezeichneten Pfeile strömt. Im Regenerierkreislauf 11 wird trockene Luft durch die Patrone 9ʹ geführt, wobei diese Luft die Feuchtigkeit aus der Patrone 9ʹ aufnimmt und sie somit trocknet. Das in der Patrone 9ʹ befindliche Wasser muß in Dampfform überführt werden. Deshalb wird die Regenerierluft mit der Heizeinrichtung 15 vor dem Eintritt in die Patrone 9ʹ so stark erhitzt (auf etwa 180°C bis 250°C), daß die Flüssigkeit in der Patrone 9ʹ in Dampfform überführt und somit von ihr aufgenommen werden kann. Die aus der Patrone 9ʹ austretende Luft hat sich infolge der Überführung der Flüssigkeit in die Dampfform abgekühlt, so daß die Heizeinrichtung 15 die Luft um diesen Abkühlungsbetrag vor dem Eintritt in die Patrone 9ʹ wieder aufheizt. Dieser Temperaturunterschied entspricht im wesentlichen nur der Verdampfungsenergie, die notwendig ist, um die Flüssigkeit in der Patrone 9ʹ in die Dampfform zu überführen. Da während des beschriebenen Trocknungsvorganges in den Regenerierkreislauf 11 keine atmosphärische Luft gelangt, kann die Patrone 9ʹ im Regenerierkreislauf 11 optimal entfeuchtet werden. Die Isolierung 13 stellt sicher, daß die Wärmeverluste beim Durchströmen der Leitung 12 gering sind, so daß die Heizeinrichtung 15 die Regenerierluft nur wenig aufheizen muß.Durch den geschlossenen Regenerierkreislauf 11 kann das in der Patrone 9ʹ befindliche Wasser praktisch ohne Energieverlust verdampft werden. Zwischen den Leitungen 6 und 12 ist in Strömungsrichtung der Trocknungsluft vor und in Strömungsrichtung der Regenerierluft hinter der Patrone 9 bzw. 9ʹ (Fig.1a) ein Ventil 19 eingebaut, das in Fig. 1a eine solche Lage hat, daß die Trocknungsluft in der Leitung 6 der Trocknungspatrone 9 und die Regenerierluft nach Verlassen der zu regenerierenden Patrone 9ʹ der Heizeinrichtung 15 über das Gebläse 14 zugeführt wird.

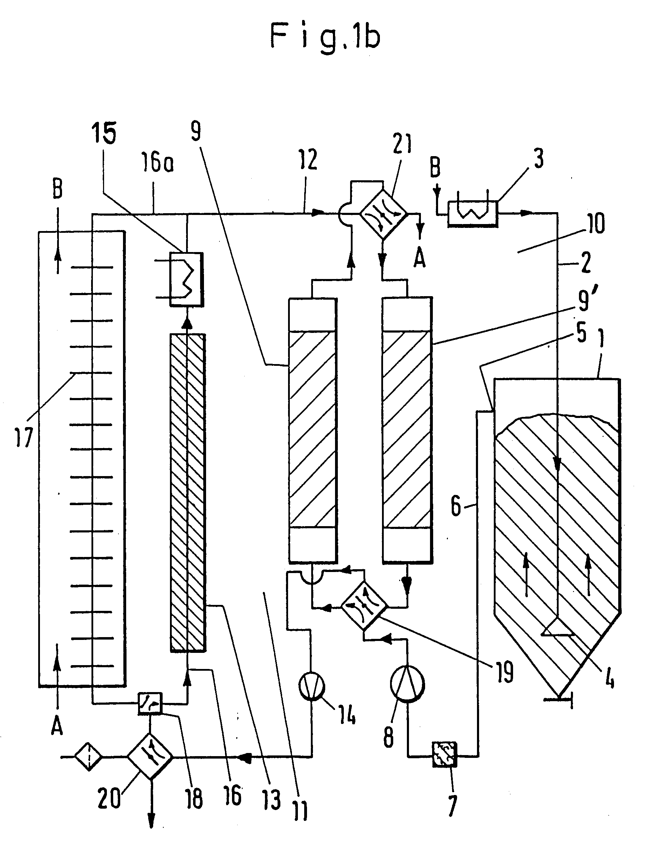

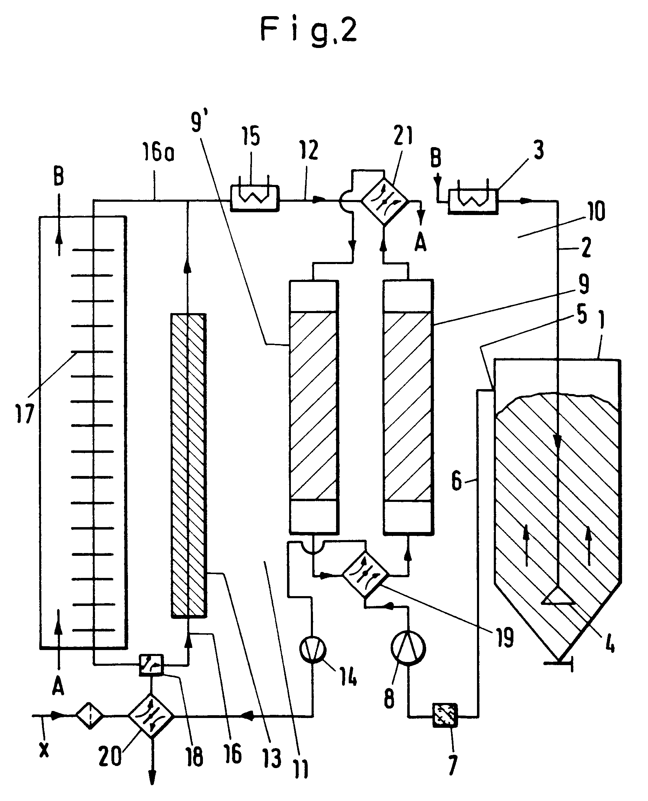

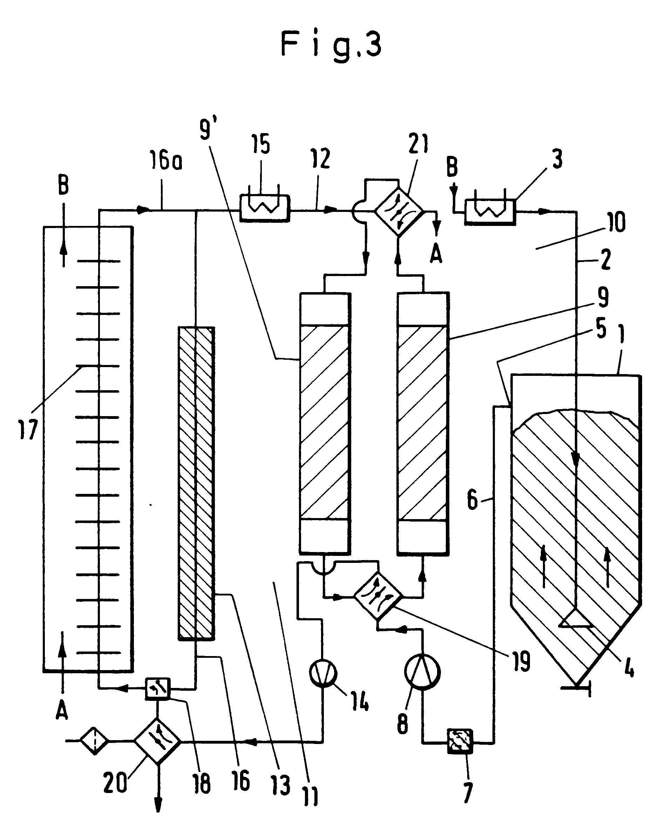

Wenn die Patrone 9ʹ getrocknet ist oder wenn die im Regenerierkreislauf 11 strömende Luft gesättigt ist, wird die Leitung 12 kurzzeitig geöffnet, damit die inzwischen mit Feuchtigkeit beladene Regenerierluft aus dem Regenerierkreislauf 11 austreten kann. Hierzu ist in der Leitung 12 nach dem Gebläse 14 ein Auslaßventil 20 vorgesehen, das in diesem Falle geöffnet wird (Fig.2). Gleichzeitig mit dem Austreten der mit Feuchtigkeit beladenen Regenerierluft strömt atmosphärische neue Luft bei "X" in die Leitung 12, mit der dann nach Schließen des Auslaßventiles erneut getrocknet werden kann. Mit dieser neuen Luft kann nunmehr in der beschriebenen Weise die gleiche oder eine andere Trocknungspatrone 9ʹ getrocknet werden. Die atmosphärische Luft ist zwar geringfügig mit Feuchtigkeit beladen, jedoch ist der Anteil der Feuchtigkeit innerhalb des Regenerierkreislaufes 11 gering, weil während des Regeneriervorganges nicht fortwährend neue atmosphärische Luft hinzugefügt wird, sondern im geschlosssenen Kreislauf geführt wird. Während des Ausblasens der verbrauchten Regenerierluft und des Einziehens neuer atmosphärischer Luft bleibt der Leitungszweig 16 a weiterhin geschlosssen. (Fig.2)
Wenn die Patrone 9ʹ im Regenerierkreislauf 11 getrocknet ist, kann sie in der Regel nicht sofort in den Trocknungskreislauf 10 geschaltet werden, weil sie beim Regeneriervorgang durch die heiße Regenerierluft erwärmt worden ist. Die Patrone 9ʹ ist nach der Regeneration zu heiß, so daß sie gekühlt werden muß. Hierzu wird die Heizeinrichtung 15 im Regenerierkreislauf 11 abgeschaltet bzw. durch Umschalten des Ventiles 18 in den Leitungsteil 16 gelegt, der nicht von Kühlluft durchströmt wird (Fig. 3). Dies hat den Vorteil, daß der in der Heizeinrichtung 15 enthaltene Wärmeinhalt weitgehend erhalten bleibt. Außerdem wird der Leitungszweig 16a über die Ventile 20, 18 geöffnet, so daß die Regenerierluft in Richtung der Pfeile in Fig. 3 im Kreislauf durch den Wärmetauscher 17 geführt wird. Da die Regenerierluft nicht mehr erwärmt wird, kann sie beim Durchströmen der getrockneten Patrone 9ʹ Wärme aufnehmen und sie dadurch kühlen. Die aus der Patrone 9ʹ austretende, erwärmte Luft durchströmt den Wärmetauscher 17 und gibt dabei ihre Wärme an ihn ab. Auf diese Weise wird die Patrone 9ʹ nach dem Trocknen (Fig.1a und 2) auf die erforderliche Temperatur gekühlt. Diese optimale Rückkühltemperatur liegt bei der Temperatur, die die Trocknungspatrone im Trocknungskreislauf hat. Es soll also soweit zurückgekühlt werden, daß bei Beendigung des Rückkühlvorganges die beiden Patronen 9,9ʹ (im Regenerierkreislauf und im Trocknungskreislauf) die gleiche Temperatur aufweisen. Es ist wichtig, den Wärmetauscher 17 in jedem Falle einzusetzen, da dies die ökonomischste Methode ist, die beiden Patronen 9,9ʹ auf gleiche Temperatur zu bringen. Die in der heißen (regenerierten) Patrone 9ʹ vorhandene Energie kann damit vollständig genutzt werden und die Zielsetzung der optimalen Rückkühltemperatur wird zwangsweise ohne weiteren Aufwand erreicht. Damit diese Vorteile erreicht werden können, ohne daß die Temperatur im Trocknungskreis zu hoch steigt, muß anstelle eines Umschaltventiles im Regenerierkreislauf 11 für die Umschaltung von der Aufheizphase in die Rückkühlphase das Regelventil 18 eingesetzt werden. Im einfachsten Fall kann anstelle des Regelventiles 18 auch eine Umschaltklappe vorgesehen sein. Sie wird nach einer ersten Umschaltung auf den Wärmetauscher 17 immer dann geschlossen, wenn die Temperatur im Trocknungskreislauf 10 den gewünschten Sollwert übersteigt und wird umgeschaltet, sobald diese Temperatur wieder unterschritten ist. Da bei der Rückkühlung die Luft im Kreislauf geführt wird, d. h. nicht fortwährend atmosphärische, mit Feuchtigkeit beladene Luft hinzugefügt wird, wird die Patrone 9ʹ bei diesem Kühlvorgang nicht schon mit Feuchtigkeit beladen. Durch diese Verfahrensweise wird ein extrem tiefer Taupunkt erreicht, der in der Größenordnung von etwa -50°C bis -70°C liegt. Durch die beschriebene Regenerierung wird somit ein optimaler Wirkungsgrad der Vorrichtung erreicht. Wenn die Patrone 9ʹ auf die geforderte Temperatur gekühlt worden ist, kann sie in den Trocknungskreislauf 10 geschaltet werden (Fig 1b; nunmehr Patrone 9), so daß sie wiederum die in diesem Kreislauf geförderte Trocknungsluft nach dem Durchgang durch das zu trocknende Gut im Trocknungsbehältnis 1 in der beschriebenen Weise entfeuchten kann.

Die beschriebene Kühlung der regenerierten Patrone 9ʹ ist notwendig, wenn sie heißer ist als die Eintrittstemperatur der im Trocknungskreislauf 10 strömenden Luft beim Eintritt in die Trocknungspatrone 9. Der Wärmetauscher 17 ist ein an sich bekannter Luft-Luft-Tauscher. Die vom Wärmetauscher 17 abgegebene Abwärme bei der Kühlung kann zur Erwärmung der Luft im Trocknungskreislauf 10 oder auch für andere Verwendungszwecke herangezogen werden. Mit der Abwärme kann die Luft im Trocknungskreislauf 10 dann erwärmt werden, wenn sie eine bestimmte Mindesttemperatur hat, die z. B. bei etwa 70°C liegt. In diesem Falle kann die Luft im Trocknungskreislauf 10 ebenfalls durch den Wärmetauscher 17 geführt werden, wobei sie die von ihm abgegebene Wärme aufnimmt. Dadurch kann der Energieaufwand der Vorrichtung gering gehalten werden.

Um die regenerierte Patrone 9ʹ wieder in den Trocknungskreislauf 10 zu schalten, werden in bekannter Weise das Ventil 19 und ein Ventil 21 verwendet, die in die Leitungen 6 und 12 eingebaut sind. Das Ventil 21 sitzt in Strömungsrichtung der Trocknungsluft hinter der Patrone 9 und in Strömungsrichtung der Regenerierluft vor der Patrone 9ʹ (Fig.1a). Anstelle der Ventile 19,21 und 18,20 können auch Klappen, Drehventile (Drehkarussell) und dergleichen verwendet werden.

Die beschriebene Trocknung und Kühlung (Fig.1a,3) der Patrone 9ʹ im Regenerierkreislauf 11 wird parallel zum Trocknungsvorgang der Patrone 9 im Trocknungskreislauf 10 durchgeführt.

Wenn die Vorrichtung wenigstens zwei Trocknungspatronen hat, ist ein kontinuierlicher Trocknungsprozeß möglich (Fig. 1a, 1b). Solange die eine Trocknungspatrone 9 im Trocknungskreislauf 10 liegt (Fig.1a) kann die andere Patrone 9ʹ im Regenerierkreislauf 11 regeneriert werden. Sobald die Trocknungspatrone 9 im Trocknungskreislauf 10 erschöpft ist, kann die im Regenerierkreislauf 11 regenerierte Patrone 9ʹ in den Trocknungskreislauf (nunmehr Patrone 9; Fig. 1b) und die erschöpfte Trocknungspatrone 9 (nunmehr Patrone 9'; Fig. 1b) in den Regenerierkreislauf 11 geschaltet werden. Im Trocknungskreislauf 10 können weitere Trocknungspatronen vorgesehen sein.

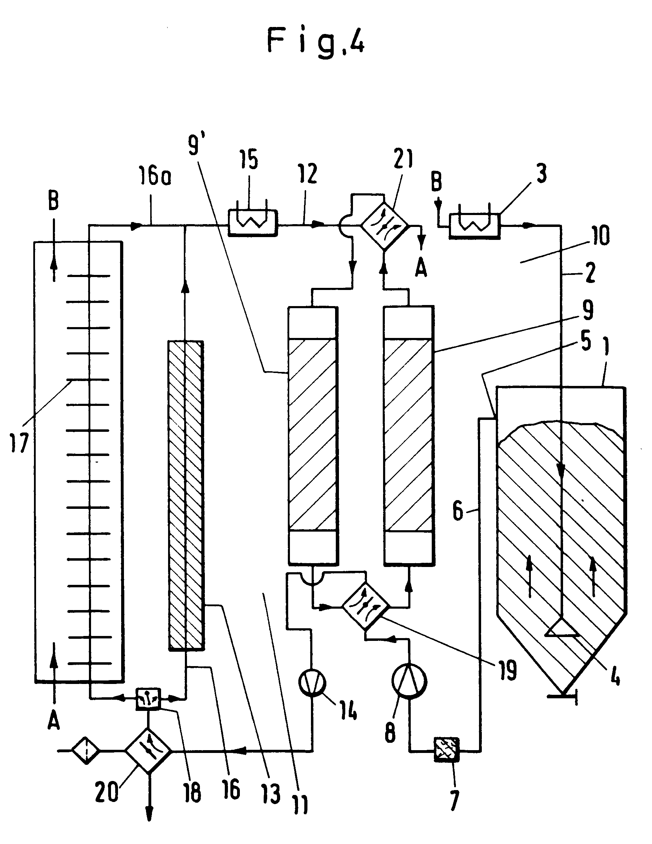

Fig. 4 zeigt eine Möglichkeit, wie die an den Wärmetauscher 17 abgegebene Wärme zum Aufheizen der im Trocknungskreislauf 10 strömeneden Luft herangezogen werden kann. Nach dem Austritt aus der Trocknungspatrone 9 muß die Luft wieder auf die jeweilige Temperatur aufgeheizt werden. Um hierbei Energie einzusparen, wird die Trocknungsluft nicht wieder direkt über die Heizeinrichtung 3, sondern über den Wärmetauscher 17 geführt. Wie anhand von Fig. 3 beschrieben worden ist, nimmt der Wärmetauscher 17 die Wärme der zum Kühlen im Regenerierkreislauf 11 strömenden Luft auf. Diese Wärme wird von der Luft im Trocknungskreislauf 10 aufgenommen, die am Wärmetauscher 17 vorbeiströmt. Somit wird die Trocknungsluft nach dem Durchtritt durch die Trocknungspatrone 9 schon aufgeheizt, so daß sie mit der Heizeinrichtung 3 nur noch wenig aufgeheizt werden muß.

Die in der Patrone 9ʹ vorhandene Energie wird über den Wärmetauscher 17 auf den Trocknungskreislauf 10 so übertragen, daß das Ventil 18 den Regenerierkreislauf 11 so aufteilt, daß ein Teilstrom über den Wärmetauscher 17 im Leitungszweig 16a und ein anderer Teilstrom über den Leitungszweig 16 (bei ausgeschalteter Heizung 15) geführt wird. Der eine über dem Wärmetauscher 17 strömende Teilstrom soll nur so groß sein, daß die Temperatur auf den Trockungskreislauf 10 nicht den Sollwert (bei ausgeschalteter Heizung 3) übersteigt. Das Ventil 18 kann auch so geschaltet sein, daß es entsprechend dem Energiebedarf im Trocknungskreislauf 10 in kurzen Abständen den Regenerierkreislauf 11 über die Zweigleitung 16a bzw. 16 führt.

Wenn für das Gut im Trocknungsbehältnis 1 nur tiefe Trocknungstemperaturen verwendet werden dürfen, dann wird die aus dem Trocknungsbehältnis austretende Luft nicht mehr über den Wärmetauscher 17 geführt, sondern ausschließlich im Trocknungskreislauf 10 entsprechend Fig. 3. Andererseits kann in diesem Falle die im Regenerierkreislauf 11 sitzende Patrone 9ʹ nach dem Regenerieren (Fig. 1a und 2) nicht sofort in den Trocknungskreislauf 10 geschaltet werden, weil dann die Temperatur dieser Patrone 9ʹ noch zu hoch ist. Um die Kühlung der Patrone 9ʹ,wie anhand von Fig.3 erläutert, zu beschleunigen, kann mit dem Gebläse 14 im Regenerierkreislauf 11 die Kühlluft im Kreislauf gefördert werden, um durch eine erhöhte Strömungsgeschwindigkeit den Wärmeaustausch an die Umgebung oder für andere Verwendungszwecke am Wärmetauscher 17 zu beschleunigen und damit die Trocknungspatrone 9ʹ rasch abzukühlen.

## Patentansprüche

1. Verfahren zum Regenerieren einer mit Feuchtigkeit beladenen Trocknungpatrone (9'), bei dem frische atmosphärische Luft einem Regenerierkreislauf (11), in dem die Trocknungspatrone (9') liegt, zugeführt wird, die unter wiederholtem Aufheizen im geschlossenen Kreislauf unter Aufnahme der Feuchtigkeit durch die Trocknungspatrone (9') strömt, die anschließend im geschlossenen Kreislauf gekühlt wird,
dadurch gekennzeichnet, daß die Regenerierluft bei Erreichen der Sättigung oder bei trockener Trocknungspatrone (9') ausgeblasen wird, daß dem geschlossenen Kreislauf, falls die Trocknungspatrone (9') bei Erreichen der Sättigung der Regenerierluft noch nicht vollständig trocken ist, zur weitergehenden Trocknung erneut frische atmosphärische Luft zugeführt wird, daß dieser Vorgang so lange wiederholt wird, bis die Trocknungspatrone (9') trocken ist, und daß die Trocknungspatrone (9') anschließend durch neue atmosphärische Luft gekühlt wird, die im geschlossenen Regenerierkreislauf (11) unter wiederholter Abkühlung geführt wird.

2. Verfahren nach Anspruch 1,
dadurch gekennzeichnet, daß die Kühlluft über mindestens einen Wärmetauscher (17) geführt wird.

3. Verfahren nach Anspruch 2,
dadurch gekennzeichnet, daß am Wärmetauscher (17) die Kühlluft des Regenerierkreislaufes (11) an Trocknungsluft eines Trocknungskreislaufes (10) mit einer weiteren Trocknungspatrone (9) vorbeigeführt wird, wobei die Kühlluft die beim Durchströmen der zu regenerierenden Trocknungspatrone (9') aufgenommene Wärme an die Trocknungsluft abgibt.

4. Verfahren nach Anspruch 3,
dadurch gekennzeichnet, daß die im Regenerierkreislauf (11) befindliche Trocknungspatrone (9') durch die Kühlluft im wesentlichen auf die gleiche Temperatur gekühlt wird wie die im Trocknungskreislauf (10) liegende Trocknungspatrone (9).

5. Trockner mit einer Regeneriervorrichtung zur Durchführung des Verfahrens nach Anspruch 1, mit einem Trocknungskreislauf, in dem ein Behältnis (1) für das zu trocknende Gut und mindestens eine Trocknungspatrone liegen (9), wobei jeweils eine Trocknungspatrone (9') mittels eines Stellglieds (19,21) in einen geschlossenen, vom Trocknungskreislauf (10) getrennten Regenerierkreislauf (11) schaltbar ist, welcher ein den Zutritt atmosphärischer Luft ermöglichendes Ventil (20) und ein Auslaßventil (20) für die feuchte Regenerierluft aufweist, und in dem mindestens eine Heizeinrichtung (15), ein Gebläse (14) und mindestens ein für die Kühlphase der zu regenerierenden Patrone über ein Stellteil (18) zuschaltbarer Wärmetauscher (17) liegen.

6. Trockner nach Anspruch 5 oder 6,
dadurch gekennzeichnet, daß die Heizeinrichtung (15) in Strömungsrichtung der Regenerierluft zwischen dem Gebläse (14) und der zu regenerierenden Trocknungspatrone (9') liegt.

7. Trockner nach einem der Ansprüche 5 bis 7,
dadurch gekennzeichnet, daß die Heizeinrichtung (15) während des Kühlvorganges in einem durch das Stellteil (18) absperrbaren Leitungsteil (16) des Regenerierkreislaufes (11) liegt.

8. Trockner nach einem der Ansprüche 5 bis 8, der mindestens zwei Trocknungspatronen (9; 9') aufweist,
dadurch gekennzeichnet, daß der Trocknungskreislauf (10) an den Wärmetauscher (17) anschließbar ist.

## Claims

1. Method for regenerating a drying cartridge (9') laden with moisture, in which fresh atmospheric air is supplied to a regenerating circuit (11), in which the drying cartridge (9') is located, which air flows through the drying cartridge (9') with repeated heating in the closed circuit, thus absorbing the moisture, which air is then cooled in the closed circuit, characterized in that the regenerating air is blown out on reaching saturation or when the drying cartridge (9') is dry, in that fresh atmospheric air for further drying is again supplied to the closed circuit, if the drying cartridge (9') is not yet completely dry when the regenerating air reaches saturation, in that this process is repeated until the drying cartridge (9') is dry and in that the drying cartridge (9') is then cooled by new atmospheric air, which is guided in the closed regenerating circuit (11) with repeated cooling.

2. Method according to Claim 1, characterized in that the cooling air is guided through at least one heat exchanger (17).

3. Method according to Claim 2, characterized in that at the heat exchanger (17), the cooling air of the regenerating circuit (11) is guided past drying air of a drying circuit (10) with a further drying cartridge (9), the cooling air delivering the heat absorbed upon flowing through the drying cartridge (9') to be regenerated, to the drying air.

4. Method according to Claim 3, characterized in that the drying cartridge (9') located in the regenerating circuit (11) is cooled by the cooling air substantially to the same temperature as the drying cartridge (9) located in the drying circuit (10).

5. Dryer with a regenerating apparatus for carrying out the method according to Claim 1, with a drying circuit, in which a container (1) for the material to be dried and at least one drying cartridge (9) are located, respectively one drying cartridge (9') being able to be controlled by means of a control member (19, 21) in a closed regenerating circuit (11) separated from the drying circuit (10), which circuit comprises a valve (20) facilitating the entry of atmospheric air and an outlet valve (20) for the moist regenerating air and in which are located at least one heating device (15), a fan (14) and at least one heat exchanger (17) able to be switched on by way of a control member (18) for the cooling phase of the cartridge to be regenerated.

6. Dryer according to Claim 5 or 6, characterized in that the heating device (15) is located in the flow direction of the regenerating air between the fan (14) and the drying cartridge (9') to be regenerated.

7. Dryer according to one of Claims 5 to 7, characterized in that during the cooling process, the heating device (15) is located in a part of the line (16) of the regenerating circuit (11) able to be closed off by the control part (18).

8. Dryer according to one of Claims 5 to 8, which comprises at least two drying cartridges (9; 9'), characterized in that the drying circuit (10) can be connected to the heat exchanger (17).

## Revendications

1. Procédé pour régénérer une cartouche de séchage (9') chargée d'humidité, dans lequel de l'air atmosphérique frais est amené dans un circuit de régénération (11) comprenant la cartouche de séchage (9'), qui, réchauffé à plusieurs reprises en circuit fermé et en absorbant l'humidité, traverse ladite cartouche de séchage (9') laquelle est ensuite refroidie en circuit fermé, **caractérisé en ce** que l'air de régénération est évacué lorsque la saturation est atteinte ou lorsque la cartouche de séchage (9') est sèche, qu'au cas ou la cartouche de séchage (9') n'est pas encore parfaitement sèche lors de la saturation de l'air de régénération, de l'air atmosphérique supplémentaire est envoyé dans le circuit fermé pour poursuivre le séchage, que cette opération est répétée jusqu'à ce que la cartouche de séchage (9') soit sèche, et que la cartouche de séchage (9') est ensuite refroidie par de l'air atmosphérique frais qui circule en circuit de régénération fermé (11), avec refroidissement répété.

2. Procédé selon la revendication 1, caractérisé en ce que l'air de refroidissement passe par au moins un échangeur de chaleur (17).

3. Procédé selon la revendication 2, caractérisé en ce que sur l' échangeur de chaleur (17), l'air de refroidissement du circuit de régénération (11) passe devant l'air de séchage d'un circuit de séchage (10) muni d'une autre cartouche de séchage (9), l'air de refroidissement cédant à l'air de séchage la chaleur absorbée lors du passage par la cartouche de séchage (9') à régénérer.

4. Procédé selon la revendication 3, caractérisé en ce que la cartouche de séchage (9') placée dans le circuit de régénération (11) est refroidie par l'air de refroidissement sensiblement à la même température que celle de la cartouche de séchage (9) placée dans le circuit de séchage (10).

5. Séchoir avec un dispositif de régénération pour la mise en oeuvre du procédé selon la revendication 1, comprenant un circuit de séchage avec un réservoir (1) pour les matières à sécher et au moins une cartouche de séchage (9), respectivement l'une des cartouches de séchage (9') pouvant être commutée au moyen d'un organe de manoeuvre (19, 21) sur un circuit de régénération (11) fermé et séparé du circuit de séchage (10), lequel comporte une soupape (20) permettant l'entrée d'air atmosphérique et une soupape de sortie (20) pour l'air de régénération humide, et dans lequel sont insérés au moins un dispositif de chauffage (15), un ventilateur (14) et au moins un échangeur de chaleur (17) qui, par l'intermédiaire d'un organe de manoeuvre (18), peut être mis en circuit pour la phase de refroidissement de la cartouche à régénérer.

6. Séchoir selon la revendication 5, caractérisé en ce que le dispositif de chauffage (15) est situé, vu dans la direction d'écoulement de l'air de régénération, entre le ventilateur (14) et la cartouche de séchage (9') à régénérer.

7. Séchoir selon l'une des revendications 5 ou 6, caractérisé en ce que le dispositif de chauffage (15) est inséré pendant l'opération de refroidissement, dans une branche de conduite (16) du circuit de régénération (11) qui peut être bloquée par l'élément de manoeuvre (18).

8. Séchoir selon l'une des revendications 5 à 7, équipé d'au moins deux cartouches de séchage (9; 9'), caractérisé en ce que le circuit de séchage (10) peut être couplé avec l'échangeur de chaleur (17).
